(19) Europäisches Patentamt
European Patent Office
Office européen des brevets

(11) **EP 4 382 547 A1**

(12) **EUROPÄISCHE PATENTANMELDUNG**

(43) Veröffentlichungstag:
**12.06.2024 Patentblatt 2024/24**

(21) Anmeldenummer: 23211837.2

(22) Anmeldetag: **23.11.2023**

(51) Internationale Patentklassifikation (IPC):
*C08G 59/06* (2006.01)  *C08G 59/32* (2006.01)
*C08G 59/62* (2006.01)  *C09D 163/00* (2006.01)
*C09J 163/00* (2006.01)

(52) Gemeinsame Patentklassifikation (CPC):
**C09D 163/00; C08G 59/063; C08G 59/3218;
C08G 59/621; C09J 163/00**

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**KH MA MD TN**

(30) Priorität: **07.12.2022 DE 102022132566**

(71) Anmelder: **Universität Kassel
34109 Kassel (DE)**

(72) Erfinder:
• **Winkel, Andreas
34125 Kassel (DE)**
• **Kahlmeyer, Martin
34260 Kaufungen (DE)**
• **Burnett, Moira
37127 Dransfeld (DE)**
• **Böhm, Stefan
38179 Schwülper (DE)**

(74) Vertreter: **Godemeyer Blum Lenze Patentanwälte
Partnerschaft mbB - werkpatent
An den Gärten 7
51491 Overath (DE)**

(54) **MIT BIOBASIERTEN EPOXIDHARZEN BESCHICHTETE SUBSTRATE, DEREN HERSTELLUNG UND VERWENDUNG SOLCHER EPOXIDHARZE ALS ADHÄSIVE BESCHICHTUNGSMITTEL**

(57) Die Erfindung betrifft Substrate, die mit härtbaren, biobasierten, einkomponentigen Epoxidharzen beschichtet sind, deren Herstellung sowie die Verwendung solcher biobasierten einkomponentigen Epoxidharze als Beschichtungsmittel oder als Klebstoff.

**Beschreibung**

Technisches Gebiet der Erfindung

Die Erfindung betrifft Substrate, die mit härtbaren, biobasierten, einkomponentigen Epoxidharzen beschichtet sind, deren Herstellung sowie die Verwendung solcher biobasierten Epoxidharze als Beschichtungsmittel oder als Klebstoff.

Technischer Hintergrund und Stand der Technik

Duromere, auch Duroplaste genannt, sind Kunststoffe, die nach ihrer Aushärtung durch Erwärmung oder andere Maßnahmen nicht mehr verformt werden können. Sie sind harte, amorphe, unlösliche Polymere. Die Makromoleküle sind über kovalente Bindungen engmaschig vernetzt, was ihre fehlende Erweichung beim Erhitzen verursacht. Daher sind sie nach der Aushärtung nicht mehr umformbar. Die Vorprodukte (Prepolymere) sind in der Regel Kunstharze, die noch schmelzbar bzw. löslich sind und, oft mit Füll- und Farbstoffen versetzt, gegossen oder warmgepresst werden können. Die Prepolymere sind mehrfunktionelle Verbindungen, die mit Hilfe von Härtern und evtl. Katalysatoren und/oder durch hohe Temperaturen polymerisieren, was zu einer engmaschigen Vernetzung führt.

Kunstharze, die Epoxidgruppen tragen, werden als Epoxidharze, Polyepoxide oder Epoxyharze bezeichnet. Nach der Aushärtung, also der Reaktion des Epoxidharzes mit einem Härter, besitzen Epoxidharze gute mechanische Eigenschaften (hohe Steifigkeiten und Festigkeiten), sind daher hoch belastbar und weisen eine gute Temperatur- und Chemikalienbeständigkeit auf. Die hochwertigen Kunststoffe werden für anspruchsvolle Lösungen in den Bereichen Klebstoffe, Beschichtungen, Harze für faserverstärkte Kunststoffe bzw. ganz allgemein als Werkstoff eingesetzt.

Epoxidharze basieren heutzutage primär auf petrochemischen Komponenten, weil die Grundchemikalie der Epoxidharzchemie (Bisphenol A) noch nicht biologisch hergestellt werden kann. Es existieren allerdings Ansätze, biobasierte Ausgangsstoffe für die Herstellung von Epoxidharzkomponenten zu verwenden. Als Beispiel sind hier Tannine zu nennen, Polyphenole, die als sekundäre Pflanzenstoffe nach Einführen von Epoxygruppen durch Reaktion mit gängigen Härtern duromere Kunststoffe ergeben und auch für einen industriellen Einsatz in ausreichender Menge zur Verfügung stehen.

US 4,435,529 A offenbart Zusammensetzungen mit einem Reaktionsprodukt, welches durch Vernetzung eines Epoxidharzes, insbesondere eines Polyepoxids, mit einem Tannin erhalten wird. Bei der Reaktion des Tannins mit dem Epoxidharz werden Katalysatoren wie Phosphoniumsalze hinzugefügt. Die erhaltenen Zusammensetzungen können in Wasser oder Wasser-Lösungsmittel-Gemischen dispergiert oder gelöst werden. Anschließend können die Zusammensetzungen auf einem Substrat aufgetragen und getrocknet und/oder mit Hilfe eines Härters ausgehärtet werden.

WO 2018/160520 A1 bezieht sich im Allgemeinen auf Zusammensetzungen aus Tannin/Epoxy-Reaktionsprodukten sowie auf Verfahren zu deren Herstellung und Verwendung. Es entstehen Zusammensetzungen, die unter Wärme aushärten. Das Tannin fungiert dabei als Härter und Vernetzungsmittel. Bei dem Epoxidmaterial handelt es sich um ein Epoxidharz bzw. Polyepoxid.

EP 2 435 493 B1 beschreibt Epoxyharze, die entweder durch Umsetzung von Epoxy-Prepolymeren mit Härtern oder durch Umsetzung von Epoxy-Prepolymeren mit Acryl- oder Methacrysäure erhalten werden können sowie deren Verwendung als Beschichtungsmittel.

Bei Verwendung der Epoxidharze des Standes der Technik als Beschichtungsmittel oder als Klebstoff werden üblicherweise Zusammensetzungen eingesetzt, die neben dem Epoxidharz auch Härter enthalten. Diese sind in der Regel mehrfunktionale Verbindungen, z. B. Diamine, Carbonsäureanhydride oder Dicyandiamid, welche mit den Epoxygruppen der Epoxidharze quervernetzen und so gehärtete Polymere ausbilden.

Aufgabe der vorliegenden Erfindung ist es, einen Beschichtungsstoff oder Klebstoff auf Epoxidharzbasis bereitzustellen, welcher auch ohne zusätzlich zugesetzten Härter aushärten kann. Weitere Aufgabe ist es, einen Beschichtungsstoff oder Klebstoff bereitzustellen, welcher aus überwiegend biobasierten Edukten hergestellt werden kann.

Detaillierte Beschreibung

Die vorliegende Aufgabe wird gelöst durch ein beschichtetes Substrat, umfassend ein Substrat dessen Oberfläche zumindest teilweise beschichtet ist mit einer Zusammensetzung, welche ein biobasiertes Epoxidharz umfasst, wobei das biobasierte Epoxidharz eine ohne zusätzlichen Härter härtbare Polyglycidylether-Polyhydroxy-Polyphenyl-Verbindung ist.

Unter "Polyglycidylether-Polyhydroxy-Polyphenyl-Verbindungen" werden im Rahmen der Erfindung chemische Verbindungen verstanden, welche mehrere Phenylgruppen als Einheit ("Polyphenyl"-Einheit) aufweisen und welche mehrere Hydroxygruppen ("Polyhydroxy") als auch mehrere Glycidylethergruppen ("Polyglycidylether") aufweisen.

Eine "Polyphenyl"-Einheit im Sinne der Erfindung ist eine Einheit, die in organischen Verbindungen natürlichen Ursprungs vorkommt und die aus Pflanzen oder Tieren gewonnen werden können (biobasierte Polyphenole). Die Polyglycidylether-Polyhydroxy-Polyphenyl-Verbindungen der Erfindung enthalten wenigstens eine Polyphenyleinheit. Eine Polyphenyleinheit enthält wenigstens zwei Phenylgruppen, wobei jede Phenylgruppe wenigstens mit einem Sauerstoffatom verbunden ist. Die Sauerstoffatome selbst zählen im Sinne der Erfindung nicht zu den Polyphenyleinheiten. Gegebenenfalls werden solche Sauerstoffatome den Hydroxygruppen zugeordnet oder anderen Struktureinheiten, die z. B. über Ethergruppen mit der/den Polyphenyleinheit(en) verbunden sind.

Zu den biobasierten Polyphenolen, von denen die Polyphenyleinheiten im Sinne der Erfindung abgeleitet sein können, zählen zahlreiche unterschiedliche Pflanzenstoffe, unter anderem die Farbstoffe der Flavonoide und Anthocyane, Procyanidine, Benzoesäurederivate (z. B. Hydroxybenzoesäuren wie Vanillinsäure, Trihydroxybenzoesäuren wie Gallussäure und Dihydroxybenzoesäuren wie Protocatechusäure), Zimtsäurederivate (z. B. die Hydroxyzimtsäuren Kaffeesäure und p-Cumarsäure) und Stilbenderivate (etwa Resveratrol). Insgesamt sind über 8000 verschiedene polyphenolische Verbindungen in Pflanzen identifiziert; ihre gemeinsame Vorstufe ist Phenylalanin bzw. dessen Vorläufer Shikimisäure.

Die erfindungsgemäß eingesetzten biobasierten Epoxidharze enthalten mindestens zwei Hydroxygruppen, die unmittelbar an wenigstens eine der Polyphenyleinheit(en) angebunden sind. Diese Hydroxygruppen können entweder schon natürlicherweise in den biobasierten Polyphenolen, auf denen die polyphenolischen Struktureinheiten im Sinne der Erfindung basieren, vorhanden sein oder können (gegebenenfalls auch nur teilweise) nachträglich durch chemische Reaktion eingefügt worden sein. Vorzugsweise enthalten die Polyglycidylether-Polyhydroxy-Polyphenyl-Verbindungen der vorliegenden Erfindung drei oder mehr solche Hydroxygruppen, besonders bevorzugt vier oder mehr solche Hydroxygruppen.

Die erfindungsgemäß eingesetzten biobasierten Epoxidharze enthalten mindestens zwei Glycidylethergruppen, die unmittelbar an wenigstens eine der Polyphenyleinheit(en) angebunden sind. Diese Glycidylethergruppen sind nachträglich durch chemische Reaktion eingefügt worden, zum Beispiel durch Umsetzen von Epichlorhydrin mit mehreren Hydroxygruppen eines biobasierten Polyphenols. Vorzugsweise enthalten die Polyglycidylether-Polyhydroxy-Polyphenyl-Verbindungen der vorliegenden Erfindung drei oder mehr solche Glycidylethergruppen, besonders bevorzugt vier oder mehr solche Glycidylethergruppen.

Besonders bevorzugt sind solche biobasierten Epoxidharze, bei denen das Molverhältnis der Summe aller Polyphenyleinheiten zur Summe der Glycidylethergruppen im Bereich zwischen 1 : 2 und 1 : 50, weiter bevorzugt im Bereich zwischen 1 : 4 und 1 : 30, noch weiter bevorzugt im Bereich zwischen 1 : 6 und 1 : 20 liegt, und zwar jeweils unabhängig davon, ob die Glycidylethergruppen unmittelbar oder mittelbar über Spacer-Einheiten (siehe unten) an den Phenyleinheiten angebunden sind.

Die erfindungsgemäß eingesetzten biobasierten Epoxidharze können neben den oben definierten Polyphenyleinheiten und Hydroxy- und Glycidylethergruppen weitere Struktureinheiten enthalten.

Zu den weiteren Struktureinheiten zählen einfache Substituenten oder komplexere Einheiten, wie z. B. Spacer-Einheiten. Spacer-Einheiten können z. B. zwischen der/den Polyphenyleinheit(en) und den Glycidylethergruppen angeordnet sein. Solange die Bedingungen erfüllt sind, dass mindestens zwei Hydroxygruppen und mindestens zwei Glycidylethergruppen unmittelbar an wenigstens einer der Polyphenyleinheit(en) angebunden sind, können die erfindungsgemäß eingesetzten biobasierten Epoxidharze solche Spacer-Einheiten optional enthalten. Spacer-Einheiten sind mindestens zwei andere Struktureinheiten verbindende Einheiten. Sie können abgeleitet sein von z. B. Epoxidharzen, Bisphenol A und anderen Verbindungen. Vorzugsweise enthalten die biobasierten Epoxidharze gemäß der Erfindung keine Spacer-Einheiten zwischen der/den Polyphenyleinheit(en) und den Glycidylethergruppen.

"Härter" im Sinne der vorliegenden Erfindung sind solche Verbindungen, welche mit den Glycidylethergruppen und/oder den Hydroxygruppen des biobasierten Epoxidharzes unter Ausbildung von vernetzenden kovalenten Bindungen reagieren können. Wie oben angegeben, umfassen die Zusammensetzungen in den erfindungsgemäß beschichteten Substraten keine solchen zusätzlichen Härter, da die erfindungsgemäß verwendeten biobasierten Epoxidharze aus sich selbst heraus härtbar sind. In alternativen, nicht beanspruchten Ausführungsformen können die Zusammensetzungen als weitere Komponente jedoch einen oder mehrere Härter umfassen.

Beispiele für Härter, die nicht in den Zusammensetzungen der erfindungsgemäßen beschichteten Substraten enthalten sein brauchen bzw. nicht enthalten sind, sind solche Amine, Imidazole und Derivate davon, Imidazoline und Derivate davon, Amidine, Aziridine, Triazine, Carbonsäuren, Carbonsäureanhydride, Dicyandiamid, Guanidinderivate, Isocyanate und Polyisocyanate, wie auch Mischungen dieser Verbindungen, sofern sie mit den Glycidylethergruppen und/oder den Hydroxygruppen der erfindungsgemäß verwendeten biobasierten Epoxidharze unter Ausbildung von vernetzenden kovalenten Bindungen reagieren würden.

Die oben beschriebenen Polyglycidylether-Polyhydroxy-Polyphenyl-Verbindungen sind herstellbar durch zum Beispiel Epoxidieren einer polyphenolischen Verbindung, also den oben beschriebenen biobasierten Polyphenolen. In einem bevorzugten Beispiel ist das biobasierte Epoxidharz herstellbar durch Umsetzung einer polyphenolischen Verbindung mit Epichlorhydrin unter Ausbildung der genannten mehreren Glycidylethergruppen $-OCH_2(C_2H_3O)$.

Unter den polyphenolischen Verbindungen, aus denen ein erfindungsgemäß einsetzbares biobasiertes Epoxidharz herstellbar ist, seien genannt: Flavonoide, Isoflavonoide, Anthocyanine, Stilbenoide, Naphthochinone, Coumarine, Tanninsäuren, Ellagitannine, Lignine, Lignane, hydrolysierbare Tannine und kondensierte Tannine. Gleichermaßen können die polyphenolischen Struktureinheiten in den Polyglycidylether-Polyhydroxy-Polyphenyl-Verbindungen, unabhängig von der Herstellung dieser, abgeleitet sein von Flavonoiden, Isoflavonoiden, Anthocyaninen, Stilbenoiden, Naphthochinonen, Coumarinen, Tanninsäuren, Ellagitanninen, Ligninen, Lignanen, hydrolysierbaren Tanninen und kondensierten Tanninen.

Die erfindungsgemäßen Polyglycidylether-Polyhydroxy-Polyphenyl-Verbindungen sind vorzugsweise abgeleitet von einer polyphenolischen Verbindung, die ausgewählt ist aus Tanninsäuren, hydrolysierbaren Tanninen oder kondensierten Tanninen. Gleichermaßen ist die polyphenolische Verbindung, aus der das biobasierte Epoxidharz herstellbar ist, vorzugsweise ausgewählt aus Tanninsäuren, hydrolysierbaren Tanninen oder kondensierten Tanninen.

Die erfindungsgemäßen Zusammensetzungen können neben den biobasierten Epoxidharzen ein oder mehrere weitere Komponenten enthalten, zum Beispiel ausgewählt aus folgender Liste: Dispersionsmittel, Lösungsmittel, Rheologieadditive (z. B. pyrogene Kieselsäure), Katalysatoren (z. B. Harnstoffderivate), Haftvermittler (z. B. Organosilane), Füllstoffe (z. B. Quarzmehl, Aluminiumoxide, Silberpulver), Filmbildner (z. B. Acrylate, Polyamide, Phenoxyharze, Polyurethane oder Ethylenvinylacetate), UV-Absorber, Reaktivverdünner bzw. Flexibilisatoren. Es ist jedoch möglich bzw. ggf. bevorzugt, dass die erfindungsgemäßen Zusammensetzungen nicht in dispergierter Form eingesetzt werden und somit frei von Dispersionsmitteln sein können. Auch können die erfindungsgemäßen Zusammensetzungen - unabhängig ob als Dispersion oder undispergiert eingesetzt - ggf. lösungsmittelfrei verwendet werden.

Die oben genannte Aufgabe der Erfindung wird auch gelöst durch ein Verfahren zur Herstellung eines beschichteten Substrats, umfassend die Schritte:

a) Bereitstellen eines Substrats,
b) Bereitstellen einer Zusammensetzung enthaltend ein biobasiertes Epoxidharz, wobei das biobasierte Epoxidharz eine ohne zusätzlichen Härter härtbare Polyglycidylether-Polyhydroxy-Polyphenyl-Verbindung ist,
c) Beschichten zumindest eines Teils der Oberfläche des Substrats mit der Zusammensetzung, und, optional,
d) Härten der Zusammensetzung durch Erwärmen der Zusammensetzung und/oder durch Erwärmen des Substrats zumindest im Bereich der beschichteten Oberfläche des Substrats.

Eine weitere Lösung der gestellten Aufgabe - und aufgrund überwiegend gleicher Maßnahmen eng verwandt mit dem oben genannten Verfahren - ist ein Verfahren zum Verkleben von Substraten miteinander, umfassend die Schritte:

a) Bereitstellen eines ersten und eines zweiten Substrats,
b) Bereitstellen einer Zusammensetzung enthaltend ein biobasiertes Epoxidharz, wobei das biobasierte Epoxidharz eine ohne zusätzlichen Härter härtbare Polyglycidylether-Polyhydroxy-Polyphenyl-Verbindung ist,
c) Beschichten zumindest eines Teils der Oberfläche des ersten Substrats mit der Zusammensetzung,
d) optional, Beschichten zumindest eines Teils der Oberfläche des zweiten Substrats mit der Zusammensetzung,
e) Inkontaktbringen des ersten Substrats zumindest im Bereich seiner beschichteten Oberfläche mit zumindest einem Teil der Oberfläche des zweiten Substrats bzw. mit der zumindest teilweise beschichteten Oberfläche des zweiten Substrats,
f) optional, Aneinanderpressen der beiden Substrate zumindest im Bereich der beschichteten Oberfläche(n),
g) Härten der Zusammensetzung durch Erwärmen der Zusammensetzung und/oder durch Erwärmen der inkontaktgebrachten Substrate zumindest im Bereich der beschichteten Oberfläche(n).

Im Rahmen der Erfindung kommen für das beanspruchte Substrat bzw. für die in den Verfahren bereitzustellenden Substrate folgende Materialien in Frage: Metalle, Hölzer, Kunststoffe, Ledererzeugnisse, Gläser, Keramiken, textile Werkstoffe, und ähnliche Materialien, sowie Kombinationen der genannten Materialien.

Das Beschichten des Substrats bzw. der Substrate kann durch folgende Verfahren erfolgen: Aufstreichen, Pinseln, Rakeln, Aufsprühen, Eintauchen, Walzen, und ähnliche Verfahren, sowie durch Kombinationen solcher Verfahren.

Das Erwärmen der Zusammensetzung und/oder das Erwärmen des bzw. der gegebenenfalls teilweise beschichteten Substrate kann durch folgende Verfahren erfolgen: Heißluft, Infrarotstrahlung, resistive Erwärmung, dielektrische Erwärmung, induktive Erwärmung, Mikrowellenstrahlung, und ähnliche Verfahren, sowie durch Kombinationen solcher Verfahren. Eine feste Beschichtung wird beispielsweise durch Erwärmen bei 180 °C für 30 Minuten im Umluftofen erhalten.

Wie oben bereits zum beanspruchten Substrat ausgeführt, braucht auch im erfindungsgemäßen Verfahren die bereitgestellte Zusammensetzung keinen Härter als weitere Komponente. Die Zusammensetzung kann jedoch als weitere Komponente einen Härter umfassen, welcher mit den Glycidylethergruppen und/oder den Hydroxylgruppen des biobasierten Epoxidharzes unter Ausbildung von vernetzenden kovalenten Bindungen reagieren kann. Entsprechende Härter sind oben beschrieben.

Das in der bereitgestellten Zusammensetzung enthaltene härtbare biobasierte Epoxidharz kann zum Beispiel durch Epoxidierung einer polyphenolischen Verbindung, wie sie oben ausführlich beschrieben sind, hergestellt werden.

Wie oben zum beanspruchten Substrat ausgeführt, gilt auch für die beanspruchten Verfahren, dass die in der jeweiligen Zusammensetzung bereitgestellte Polyglycidylether-Polyhydroxy-Polyphenyl-Verbindung von einem Polyphenol abgeleitet sein kann, welches auswählbar ist aus der Gruppe umfassend Flavonoide, Isoflavonoide, Anthocyanine, Stilbenoide, Naphthochinone, Coumarine, Tanninsäuren, Ellagitannine, Lignine, Lignane, hydrolysierbare Tannine und kondensierte Tannine.

Ein weiterer Aspekt der Erfindung ist die Verwendung der oben beschriebenen Zusammensetzungen, welche ein ohne zusätzlichen Härter härtbares biobasiertes Epoxidharz umfassen, wobei das biobasierte Epoxidharz eine Polyglycidylether-Polyhydroxy-Polyphenyl-Verbindung ist, als ein Beschichtungsmittel.

Als Beschichtungsmittel im Rahmen der Erfindung wird ein härtbarer Stoff verstanden, der auf einem Substrat zum Zweck der Optik, des Schutzes oder der Oberflächenmodifizierung des Substrats haftet und nach Vernetzung zum duromeren Werkstoff eine permanent mit dem Untergrund verbundene Schicht darstellt. Denkbar ist beispielsweise die Anwendung als AntiScratch-Lack, der das Substrat vor Beschädigung oder optischer Beeinträchtigung schützt, oder als Antikorrosionsbeschichtung für metallische Substrate. Als Vorteil kann angesehen werden, dass die Beschichtung aufgetragen und gehärtet werden kann ohne vorherigen Mischprozess mit einem Härter. Darüber hinaus ist, bei Verwendung von biobasiertem Epichlorhydrin, das Beschichtungsmittel nahezu vollständig biobasiert herstellbar.

Ein ebenfalls weiterer Aspekt der Erfindung ist die Verwendung der oben beschriebenen Zusammensetzungen als Klebstoff.

Als Anwendungen kommen dabei Klebungen in semistrukturellen und strukturellen Bereichen, also solchen Bereichen, die kritisch für die strukturelle Integrität von Bauteilen sind, infrage, bei denen langfristig mittlere bis hohe Kräfte zwischen Substraten (Metalle, Hölzer, Kunststoffe, Gläser, Keramiken) übertragen werden müssen.

Als Vorteil kann angesehen werden, dass der Klebstoff aufgetragen und gehärtet werden kann ohne vorherigen Mischprozess mit einem Härter. Darüber hinaus ist, bei Verwendung von biobasiertem Epichlorhydrin, der Klebstoff nahezu vollständig biobasiert herstellbar.

### Experimenteller Teil

Bestimmung des Hydroxyanteils

In einen 50 mL-Rundkolben mit Rückflusskühler und Magnetrührstäbchen wird die zu bestimmende Substanz eingewogen ($m_{Substanz} \approx 0{,}5$ g). Es werden 10 mL einer Mischung aus Pyridin/Essigsäureanhydrid (88/12 v/v) hinzugeben und die Mischung für 2 Std. auf 100 °C erhitzt. Anschließend wird auf Raumtemperatur abgekühlt und 20 mL Toluol und 100 mL entionisiertes Wasser zur Hydrolyse des bisher nicht umgesetzten Anhydrids hinzugegeben. Die wässrige Lösung wird gegen wässrige Natronlauge ($c_{NaOH} \approx 2$ mol/L) mit Phenolphthalein als Indikator titriert und das bis zum Farbumschlag benötigte Volumen $V_{NaOH}$(Substanz) ermittelt. Auf die gleiche Weise wird mit einer Blindprobe ohne eingewogene hydroxygruppenhaltige Substanz $V_{NaOH}$(Blind) ermittelt. Die Stoffmenge $n_{OH}$ in der eingewogenen Substanzmenge ergibt sich zu:

$$n_{OH} = \frac{[V_{NaOH}(\text{Blind}) - V_{NaOH}(\text{Substanz})] \cdot c_{NaOH}}{m_{Substanz}}$$

Bestimmung des Epoxyäquivalentgewichts (epoxy equivalent weight, EEW)

Die epoxygruppenhaltige Substanz ($m_{Substanz} \approx 0{,}3$ g) wird in einen 100 mL-Rundkolben gegeben und mit 25 mL einer wässrigen Lösung von 0,2 N Pyridiniumhydrochlorid (aus 250 mL Pyridin und 4,16 mL einer 37%igen Salzsäure) versetzt. Die Mischung wird für 20 Min. auf 115 °C unter Rückfluss erhitzt. Nach dem Abkühlen wird die überschüssige Säure mit einer wässrigen Natronlauge ($c_{NaOH} \approx 0{,}6$ mol/L) mit Phenolphthalein als Indikator titriert und das bis zum Farbumschlag benötigte Volumen $V_{NaOH}$(Substanz) ermittelt. Auf die gleiche Weise wird mit einer Blindprobe ohne eingewogene epoxygruppenhaltige Substanz $V_{NaOH}$(Blind) ermittelt.

Das Epoxyequivalentgewicht ergibt sich dann zu:

$$EEW = \frac{10^3 \cdot m_{Substanz}}{[V_{NaOH}(\text{Blind}) - V_{NaOH}(\text{Substanz})] \cdot c_{NaOH}}$$

Der Epoxygruppengehalt ergibt sich durch 1/EEW.

Beispiele zur Herstellung erfindungsgemäßer biobasierter Epoxidharze

**Beispiel 1**

Epichlorhydrin (86,5 mL) wird in einem Rundkolben vorgelegt und Tanninsäure (15 g) und Tetraethylammoniumbromid (11,6 g) hinzugegeben. Die Mischung wird für 16 Std. bei 70 °C erhitzt. Es wird auf Raumtemperatur abgekühlt und der Ansatz mit Ethylacetat (200 mL) versetzt. Die organische Phase wird mit Wasser gewaschen (3 mal 50 mL) und über Natriumsulfat getrocknet, das organische Lösemittel am Rotationsverdampfer abdestilliert. Der Rückstand wird erneut in Ethylacetat (100 mL) aufgenommen und mit Tetraethylammoniumbromid (2 g) und 20%iger Natronlauge (76,5 mL) versetzt. Die Mischung wird für 3 Std. bei Raumtemperatur gerührt. Die wässrige Phase wird abgetrennt, die organische Phase 3 mal mit je 50 mL Wasser gewaschen und über Natriumsulfat getrocknet. Anschließend wird das organische Lösemittel am Rotationsverdampfer abdestilliert. Es wird ein rötliches Öl als Produkt erhalten.

**Beispiel 2**

Epichlorhydrin (12,7 mL) wird in einem Rundkolben vorgelegt und Wasser (10 mL), Tanninsäure (3 g) und Tetraethylammoniumbromid (0,3 g) hinzugegeben. Die Mischung wird für 30 Min. bei Raumtemperatur gerührt. Anschließend wird innerhalb von 1 Std. auf 80 °C erhitzt, im Anschluss 20%ige Natronlauge (20 mL) innerhalb von 2 Std. dazugegeben. Nach Rühren für insgesamt 3,5 Std. bei 80 °C wird die Mischung auf Raumtemperatur abgekühlt, mit einem Überschuss Aceton versetzt, vom unlöslichen Feststoff abfiltriert und das Lösemittel am Rotationsverdampfer abdestilliert. Es wird ein rötliches Öl als Produkt erhalten.

**Beispiel 3**

Epichlorhydrin (20,7 mL) wird in einem Rundkolben vorgelegt und Tanninsäure (3 g) in kleinen Portionen hinzugegeben. Die Mischung wird unter Rühren auf 100 °C erhitzt. Es wird Benzyltriethylammoniumchlorid (1 g) hinzugegeben. Es wird für 1 Std. bei 100 °C weitergerührt, im Anschluss auf Raumtemperatur abgekühlt. Zum Ansatz werden Benzyltriethylammoniumchlorid (2 g) und 20%ige Natronlauge (17,6 g) hinzugegeben und dieser für 90 °C heftig gerührt. Die wässrige Phase wird im Folgenden abgetrennt, die organische mit Wasser gewaschen (3 x 50 mL) und über Natriumsulfat getrocknet. Anschließend werden die flüchtigen Bestandteile am Rotationsverdampfer abdestilliert. Es wird ein rötliches Öl als Produkt erhalten.

Beispiel zur Herstellung eines erfindungsgemäß beschichteten Substrats

Je ein Substrat wird an einem Ende in einem Bereich von 25 x 25 mm² mit jeweils einem anderen der erfindungsgemäßen biobasierten Epoxidharze aus den obigen Beispielen 1, 2 und 3 bestrichen. Nach dem Aushärten bei 180°C für 90 Minuten im Umluftofen werden die Klebungen abkühlen gelassen und für 24 Stunden bei 23°C und 50% rel. Luftfeuchtigkeit ausgelagert. Die ausgehärteten Beschichtungen sind fest, haften fest am Substrat und sind abriebfest.

Beispiele zum erfindungsgemäßen Verkleben von Substraten miteinander

Je ein Substrat (AlMg3 und DC04) wird an einem Ende in einem Bereich von 25 x 25 mm² mit dem erfindungsgemäßen biobasierten Epoxidharz aus Beispiel 3 bestrichen. Es werden wenige Glaskugeln mit einem Durchmesser von 0,25 mm als Abstandshalter aufgebracht. Das zweite Substrat aus dem jeweils gleichen Material wird so aufgelegt, dass es mit dem ersten über eine Länge von 12,5 mm überlappt und dabei am anderen Ende so aufliegt, dass es parallel zur Oberfläche des ersten Substrates verläuft. Nach Andrücken des oberen Substrats wird überschüssiges Epoxidharz abgestreift, die Klebung mit einem Gewicht beschwert und der so hergestellte Verbund in den Konvektionsofen überführt. Um ein Verrutschen der Substrate gegeneinander zu verhindern, kann das Kleben in einer entsprechenden Vorrichtung erfolgen, in der mehrere Klebungen nebeneinander erfolgen können und die ausgerichteten Substrate fixiert sind. Nach dem Aushärten bei 180 °C für 90 Minuten im Umluftofen werden die Klebungen abkühlen gelassen und für 24 Std. bei 23 °C und 50% rel. Luftfeuchtigkeit ausgelagert. Anschließend wird mittels einer Universalprüfmaschine die Kraft F ermittelt, bei der die Klebungen versagen.

Überlappungslänge lü 12,5 mm
Überlappungsbreite b 25 mm
Klebschichtdicke: 0,25 mm (eingestellt mit Glaskugeln)
Aushärtung: 180 °C für 90 Minuten
Vorbehandlung der Substrate: Laserbehandlung
Substrate und deren Maße:

- Aluminiumlegierung (AlMg3): l = 100 mm, b = 25 mm, d = 3 mm
- Stahl (DC04): l = 100 mm, b = 25 mm, d = 1,5 mm

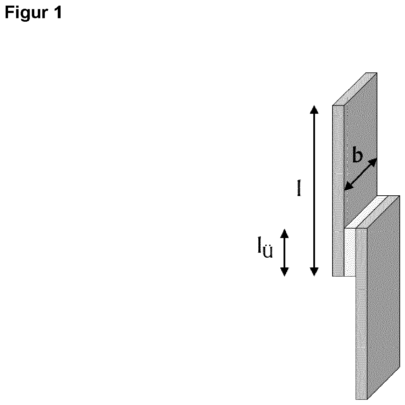

Die Zugscherprüfungen gemäß DIN EN 1465 (siehe Figur 1) ergaben folgende Ergebnisse:

Ermittelte mittlere Festigkeitswerte auf Aluminium (AlMg3) = 3,3 MPa
Ermittelte mittlere Festigkeitswerte auf Stahl (DC04) = 1,9 MPa

## Patentansprüche

1. Beschichtetes Substrat, umfassend ein Substrat mit einer Oberfläche, welche zumindest teilweise beschichtet ist mit einer Zusammensetzung, welche ein biobasiertes Epoxidharz umfasst, wobei das biobasierte Epoxidharz eine ohne zusätzlichen Härter härtbare Polyglycidylether-Polyhydroxy-Polyphenyl-Verbindung ist, und wobei die Zusammensetzung keinen Härter umfasst, welcher mit den Epoxy- und/oder den Hydroxygruppen des biobasierten Epoxidharzes unter Ausbildung von vernetzenden kovalenten Bindungen reagieren kann.

2. Beschichtetes Substrat nach Anspruch 1, wobei das biobasierte Epoxidharz herstellbar ist durch Epoxidierung einer polyphenolischen Verbindung, vorzugsweise wobei das biobasierte Epoxidharz herstellbar ist durch Umsetzung einer polyphenolischen Verbindung mit Epichlorhydrin.

3. Beschichtetes Substrat nach einem der vorherigen Ansprüche, wobei die polyphenolische Verbindung aus der das biobasierte Epoxidharz herstellbar ist ausgewählt ist aus der Gruppe umfassend Flavonoide, Isoflavonoide, Anthocyanine, Stilbenoide, Naphthochinone, Coumarine, Tanninsäuren, Ellagitannine, Lignine, Lignane, hydrolysierbare Tannine und kondensierte Tannine, bzw. wobei die Polyglycidylether-Polyhydroxy-Polyphenyl-Verbindung abgeleitet ist von einer polyphenolischen Verbindung, die ausgewählt ist aus der Gruppe umfassend Flavonoide, Isoflavonoide, Anthocyanine, Stilbenoide, Naphthochinone, Coumarine, Tanninsäuren, Ellagitannine, Lignine, Lignane, hydrolysierbare Tannine und kondensierte Tannine.

4. Beschichtetes Substrat nach Anspruch 3, wobei die polyphenolische Verbindung, aus der das biobasierte Epoxidharz herstellbar ist, ausgewählt ist aus Tanninsäuren, hydrolysierbaren Tanninen oder kondensierten Tanninen bzw. wobei die Polyglycidylether-Polyhydroxy-Polyphenyl-Verbindung abgeleitet ist von einer polyphenolischen Verbindung, die ausgewählt ist aus Tanninsäuren, hydrolysierbaren Tanninen oder kondensierten Tanninen.

5. Verfahren zur Herstellung eines beschichteten Substrats, umfassend die Schritte:

   a) Bereitstellen eines Substrats,
   b) Bereitstellen einer Zusammensetzung enthaltend ein biobasiertes Epoxidharz, wobei das biobasierte Epoxidharz eine ohne zusätzlichen Härter härtbare Polyglycidylether-Polyhydroxy-Polyphenyl-Verbindung ist,
   c) Beschichten zumindest eines Teils der Oberfläche des Substrats mit der Zusammensetzung, und, optional,
   d) Härten der Zusammensetzung durch Erwärmen der Zusammensetzung und/oder durch Erwärmen des Substrats zumindest im Bereich der beschichteten Oberfläche des Substrats.

6. Verfahren zum Verkleben von Substraten miteinander, umfassend die Schritte:

   a) Bereitstellen eines ersten und eines zweiten Substrats,
   b) Bereitstellen einer Zusammensetzung enthaltend ein biobasiertes Epoxidharz, wobei das biobasierte Epoxidharz eine ohne zusätzlichen Härter härtbare Polyglycidylether-Polyhydroxy-Polyphenyl-Verbindung ist,
   c) Beschichten zumindest eines Teils der Oberfläche des ersten Substrats mit der Zusammensetzung,

d) optional, Beschichten zumindest eines Teils der Oberfläche des zweiten Substrats mit der Zusammensetzung,

e) Inkontaktbringen des ersten Substrats zumindest im Bereich seiner beschichteten Oberfläche mit zumindest einem Teil der Oberfläche des zweiten Substrats bzw. mit der zumindest teilweise beschichteten Oberfläche des zweiten Substrats,

f) optional, Aneinanderpressen der beiden Substrate zumindest im Bereich der beschichteten Oberfläche(n),

g) Härten der Zusammensetzung durch Erwärmen der Zusammensetzung und/oder durch Erwärmen der inkontaktgebrachten Substrate zumindest im Bereich der beschichteten Oberfläche(n).

7. Verfahren nach Anspruch 5 oder 6, wobei das Material des Substrats bzw. der Substrate ausgewählt ist aus der Gruppe umfassend Metalle, Hölzer, Kunststoffe, Ledererzeugnisse, Gläser, Keramiken, textile Werkstoffe, oder Kombinationen der genannten Materialien.

8. Verfahren nach einem der Ansprüche 5 bis 7, wobei das Beschichten erfolgt durch Aufstreichen, Pinseln, Rakeln, Aufsprühen, Eintauchen, oder Walzen oder durch Kombinationen der genannten Verfahren.

9. Verfahren nach einem der Ansprüche 5 bis 8, wobei das Erwärmen der Zusammensetzung und/oder das Erwärmen des Substrats bzw. der Substrate erfolgt durch Heißluft, Infrarotstrahlung, resistive Erwärmung, dielektrische Erwärmung, Induktion, Mikrowellenstrahlung, oder durch Kombinationen der genannten Verfahren.

10. Verfahren nach einem der Ansprüche 5 bis 9, wobei die Zusammensetzung keinen Härter umfasst, welcher mit den Epoxy- und/oder den Hydroxygruppen des biobasierten Epoxidharzes unter Ausbildung von vernetzenden kovalenten Bindungen reagieren kann.

11. Verfahren nach einem der Ansprüche 5 bis 10, wobei das biobasierte Epoxidharz herstellbar ist durch Epoxidierung einer polyphenolischen Verbindung.

12. Verfahren nach einem der Ansprüche 5 bis 11, wobei die Polyglycidylether-Polyhydroxy-Polyphenyl-Verbindung abgeleitet ist von einer polyphenolischen Verbindung, die ausgewählt ist aus der Gruppe umfassend Flavonoide, Isoflavonoide, Anthocyanine, Stilbenoide, Naphthochinone, Coumarine, Tanninsäuren, Ellagitannine, Lignine, Lignane, hydrolysierbare Tannine und kondensierte Tannine.

13. Verwendung einer Zusammensetzung, welche ein ohne zusätzlichen Härter härtbares biobasiertes Epoxidharz umfasst, wobei das biobasierte Epoxidharz eine Polyglycidylether-Polyhydroxy-Polyphenyl-Verbindung ist, als Beschichtungsmittel oder als Klebstoff, wobei die Zusammensetzung keinen Härter umfasst, welcher mit den Epoxy- und/oder den Hydroxygruppen des biobasierten Epoxidharzes unter Ausbildung von vernetzenden kovalenten Bindungen reagieren kann.

**Figur 1**

Europäisches
Patentamt

European
Patent Office

Office européen
des brevets

**EUROPÄISCHER RECHERCHENBERICHT**

**Nummer der Anmeldung**

**EP 23 21 1837**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | US 2012/165429 A1 (BOUTEVIN BERNARD [FR] ET AL) 28. Juni 2012 (2012-06-28) | 5,7-9, 11,12 | INV.<br>C08G59/06 |
| A | * Beispiele 6,7 * | 10 | C08G59/32 |
| | ----- | | C08G59/62 |
| X | JAHANSHAHI S ET AL: "MALDI-TOF,13C NMR and FT-MIR analysis and strength characterization of glycidyl ether tannin epoxy resins", INDUSTRIAL CROPS AND PRODUCTS, ELSEVIER, NL, Bd. 83, 6. Januar 2016 (2016-01-06), Seiten 177-185, XP029415780, ISSN: 0926-6690, DOI: 10.1016/J.INDCROP.2015.11.067 * das ganze Dokument * | 6-9,11, 12 | C09D163/00<br>C09J163/00 |
| | ----- | | |
| X | US 2010/255315 A1 (OKABE YOSHIAKI [JP] ET AL) 7. Oktober 2010 (2010-10-07) * Absatz [0026]; Tabelle 1 * | 5-12 | |
| | ----- | | |
| X | US 2018/127399 A1 (ROUMEAS LAURENT [FR] ET AL) 10. Mai 2018 (2018-05-10) * Beispiele * | 5-12 | **RECHERCHIERTE SACHGEBIETE (IPC)** |
| | ----- | | C08G |
| X | YUSUF CELIKBAG: "Synthesis and Characterization of Bio-oil-Based Self-Curing Epoxy Resin", INDUSTRIAL & ENGINEERING CHEMISTRY RESEARCH, Bd. 56, Nr. 33, 11. August 2017 (2017-08-11), Seiten 9389-9400, XP093154326, ISSN: 0888-5885, DOI: 10.1021/acs.iecr.7b02123 * das ganze Dokument * | 1-13 | C09D<br>C09J |
| | ----- | | |

Der vorliegende Recherchenbericht wurde für alle Patentansprüche erstellt

| Recherchenort | Abschlußdatum der Recherche | Prüfer |
|---|---|---|
| Den Haag | 22. April 2024 | Hoffmann, Michael |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 23 21 1837

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-04-2024

| Im Recherchenbericht angeführtes Patentdokument | Datum der Veröffentlichung | Mitglied(er) der Patentfamilie | Datum der Veröffentlichung |
|---|---|---|---|
| US 2012165429 A1 | 28-06-2012 | EP 2435493 A1 | 04-04-2012 |
| | | FR 2946049 A1 | 03-12-2010 |
| | | JP 2012528223 A | 12-11-2012 |
| | | JP 2015078383 A | 23-04-2015 |
| | | US 2012165429 A1 | 28-06-2012 |
| | | WO 2010136725 A1 | 02-12-2010 |
| US 2010255315 A1 | 07-10-2010 | JP 2010241855 A | 28-10-2010 |
| | | US 2010255315 A1 | 07-10-2010 |
| US 2018127399 A1 | 10-05-2018 | CA 2983665 A1 | 03-11-2016 |
| | | EP 3288937 A1 | 07-03-2018 |
| | | FR 3035401 A1 | 28-10-2016 |
| | | US 2018127399 A1 | 10-05-2018 |
| | | WO 2016174334 A1 | 03-11-2016 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4435529 A
- WO 2018160520 A1
- EP 2435493 B1